# EUROPÄISCHE PATENTSCHRIFT

(11) **EP 2 199 220 B1**
(45) Veröffentlichungstag und Bekanntmachung des Hinweises auf die Patenterteilung: **01.08.2012**
(21) Anmeldenummer: 09177468.7
(22) Anmeldetag: 30.11.2009
(51) Int. Cl.: B65C 9/00

(54) **Maschine zum Ausstatten von Artikeln und Verfahren zur Steuerung der Maschine**
Machine for labelling articles and method for controlling the machine
Machine d'équipement d'articles et procédé de commande de la machine

(30) Priorität: 16.12.2008 DE 102008062580
(43) Veröffentlichungstag der Anmeldung: 23.06.2010
(73) Patentinhaber: Krones AG, 93073 Neutraubling (DE)
(72) Erfinder: Achhammer, Karl-Heinz, 93086, Wörth/Donau (DE); Auburger, Michael, 92436, Bruck (DE)
(74) Vertreter: Benninger, Johannes

(56) Entgegenhaltungen:
- EP-A1- 0 567 986
- EP-A1- 0 572 107
- EP-A1- 1 939 095
- DE-U1- 20 305 967
- DE-U1-202004 009 707

## Beschreibung

Die Erfindung betrifft eine Maschine zum Ausstatten von Artikeln mit den Merkmalen des Oberbegriffs des Anspruchs 1. Weiterhin betrifft die Erfindung ein Verfahren zur Maschinensteuerung mit den Merkmalen des Oberbegriffs des Verfahrensanspruchs 11.

Herkömmlich ausgestattete Etikettiermaschinen zur Etikettierung von Artikeln wie Getränkebehältern, Flaschen, Dosen oder dgl. weisen mehrere Baugruppen auf, die auf einer gemeinsamen Montageebene angeordnet sind, welche eine Maschinenbasis bildet. Dadurch entstehen eine relativ raumgreifende Bauweise und eine relativ schlechte Zugänglichkeit zu den einzelnen Baugruppen, was Wartungs- und Reinigungsarbeiten erschwert.

Die DE 202 21 208 U1 schlägt deshalb vor, lediglich Transportelemente zum Zuführen der Artikel zum Karussell und zum Abführen der Artikel vom Karussell auf einer gemeinsamen Tischplatte angeordnet sind, während das eigentliche Karussell zur Behandlung der Artikel beim Ausstattungsvorgang mit seinem Drehlager außerhalb der Tischplatte separat für sich auf einem eigenen Traggestell angeordnet ist. Die einzelnen Baugruppen der kompakt ausführbaren Maschine sind bei dieser Bauweise weiterhin gut für Wartungs- und Reinigungsarbeiten zugänglich.

Die Flexibilität bei der Anordnung von Ausstattungsaggregaten wie bspw. Etikettiereinheiten kann weiter erhöht werden, indem diese Baugruppen auf einer vom Karussell getrennten Aggregataufnahme angeordnet sind, die ggf. beweglich aufstellbar sein kann, wie dies in der DE 10 2004 054 057 A1 vorgeschlagen ist. Es ist wenigstens eine stationär an der Peripherie des Karussells vorgesehene bodengestützte Aggregataufnahme vorgesehen, wodurch ein schneller und genauer Wechsel von beliebigen Etikettieraggregaten ermöglicht sein soll. Die Aggregataufnahme ist beim Aufstellen der Maschine einmal exakt relativ zum Karussell bzw. der Transportebene der auszustattenden Artikel auszurichten. Die fest am Hallenboden verankerte Aggregataufnahme lässt sich auf Maß an die am Aufstellort gegebenen Verhältnisse anpassen und kann zudem eine einstellbare Konstruktion aufweisen, die eine stufenlose Ausrichtung der Aggregataufnahme relativ zum Karussell in Bezug auf die erforderliche Höhe und/oder den radialen Abstand und/oder die Neigung zur Transportebene einstellbar ist.

Eine noch weitergehende Flexibilität bei der Maschinenaufstellung und bei deren Ausstattung kann durch variables Anschließen verschiedener Etikettieraggregate für verschiedene Etikettierverfahren erreicht werden, wie dies in der WO 03/024861 A1 vorgeschlagen ist. Für die verschiedenen Etikettierverfahren wie das Etikettieren mit Selbstklebeetiketten, das Etikettieren mit Heißleim, das Etikettieren mit Kaltleim etc. sind hierbei jeweils verschiedene Etikettieraggregate vorgesehen. Auf diese Weise soll es ermöglicht werden, mit ein und derselben zentralen Bewegungseinrichtung verschiedene Etiketten auf verschiedene Arten von Flaschen aufzubringen. Zudem ist es möglich, verschiedene Etikettenarten auf ein und derselben Flasche anzubringen. Durch die modulare Konstruktion der Etikettiermaschine ist es weiterhin möglich, für verschiedene Produkte verschiedene Etikettierverfahren vorzusehen, da durch Austausch eines Etikettieraggregats ein anderer Etikettentyp in einem anderen Etikettierverfahren angebracht werden kann. Sowohl das Etikettieraggregat als auch die Bewegungseinrichtung verfügen jeweils über eine eigene Steuereinrichtung, um die jeweiligen Bewegungsabläufe zu steuern. Bei einem Wechsel des Etikettieraggregats werden die jeweiligen Steuerungen auf den gewünschten Etikettiermodus umgestellt.

In Weiterbildung einer solchen modular aufgebauten Behandlungsmaschine für Behälter und Artikel schlägt die EP 1 706 322 B1 vor, die Etikettieraggregate mit Identifikationsdaten auszustatten, bspw. in Gestalt eines elektronischen Typenschilds. Zudem sind die Bewegungseinrichtung und das Etikettieraggregat so ausgestaltet, dass die Identifikationsdaten des Etikettieraggregats von diesem an die Bewegungseinrichtung übertragen werden können, wodurch bei einem Wechsel des Etikettieraggregats zumindest ein Teil der benötigten Konfigurationsdaten der Bewegungseinrichtung und des Etikettieraggregats automatisch ausgetauscht werden können.

Die EP 1 939 095 A1 offenbart eine Etikettiermaschine, die dem Oberbegriff der Ansprüche 1 und 11 entspricht.

Ein Ziel der vorliegenden Erfindung wird in einer weiteren Verbesserung der Flexibilität und einer Bedienungserleichterung beim Wechsel von Etikettieraggregaten oder anderen Behandlungsmodulen für Artikel wie Getränkebehälter und Flaschen gesehen.

Dieses Ziel der Erfindung wird mit den Gegenständen der unabhängigen Ansprüche 1 und 11 erreicht. Merkmale vorteilhafter Weiterbildungen der Erfindung ergeben sich aus den jeweiligen abhängigen Ansprüchen.

Die Erfindung umfasst eine Maschine zum Ausstatten von Artikeln wie Behälter, Flaschen oder dgl. Die Ausstattung der Artikel erfolgt mit wenigstens einer Bewegungseinrichtung zum Bewegen der Behälter. Unter Bewegungseinrichtung ist im vorliegenden Zusammenhang jede bekannte bzw. für den vorliegenden Einsatzzweck geeignet denkbare Förder- und Handhabungseinrichtung für Artikel, Behälter und Flaschen. Diese Bewegungseinrichtungen können bspw. bei sog. Geradläufern durch Förderbänder und/oder andere Fördereinrichtungen gebildet sein. Bei einem sog. Rundläufer kann ein Teil einer solchen Bewegungseinrichtung bspw. ein Flaschen- oder Behälterkarussell sein, der wahlweise einen Einlaufstern zur Zuführung der Behälter sowie einen Auslaufstern zur Abführung der am Umfang des Karussells behandelten Behälter aufweisen kann. Eine solche Bewegungseinrichtung kann weiterhin einen Maschinentisch aufweisen, an dem Elemente wie Behälterführung, Behältertisch und Maschinenkopf montiert sind. Für die Etikettierung werden die Artikel oder Behälter der Maschine über ein Transportband an die Behälterführungen bzw. an den Drehteller übergeben. Bei einem programmgemäßen Einlaufen in die Maschine lösen die stehend ankommenden Behälter normalerweise einen gesteuerten Etikettiervorgang aus. Die Etikettierung der Behälter stellt lediglich ein Beispiel für eine Ausstattung der Behälter dar und wird im vorliegenden auch allgemeiner als Ausstattung bezeichnet. Ein Ausstattungsaggregat kann somit durch ein Etikettieraggregat gebildet sein.

Die Ausstattung der Artikel oder Behälter erfolgt mit wenigstens einem austauschbaren Ausstattungsaggregat, das beim Anschließen an die Maschine Identifikationsdaten und/oder Steuerungsinformationen mit dieser und/oder der Bewegungseinrichtung austauscht. Die aktuell nicht mit der Maschine verbundenen, d.h. die nicht aktiven Ausstattungsaggregate sind in einem Aufbewahrungsbereich abgestellt, der mit den Aggregaten sowie mit der Maschine in Wirkverbindung steht. Damit ist gemeint, dass der Aufbewahrungsraum bzw. die Aufbewahrungsräume oder Aufbewahrungsbereiche mit einer vorzugsweise kontaktlosen Steuerung und Sensorik ausgestattet sind und mit der Maschine sowie mit den Ausstattungsaggregaten weitgehend drahtlos kommunizieren können. Die Steuerung und die Sensorik des Aufbewahrungsbereichs verwalten, registrieren und überwachen somit den Bestand der Ausstattungsaggregate im Raum und an der Maschine bzw. den Maschinen. An der Maschine können bspw. auch mehrere Ausstattungsaggregate vom gleichen Typ und/oder von unterschiedlichen Typen angebracht sein.

Soll ein Wechsel oder Austausch von Ausstattungsaggregaten an einer Maschine während ihres Betriebs erfolgen, so wird ein Signal an die nicht mehr benötigten angekoppelten Aggregate übermittelt. Diese Aggregate entkoppeln sich automatisch von der Maschine und werden in den Aufbewahrungsbereich überführt. Bei diesem Vorgang wird zusätzlich noch ein Signal an den Aufbewahrungsbereich übersandt. Die Maschine signalisiert während des Entkoppelns der Aggregate dem Aufbewahrungsbereich den Bedarf an bestimmten neuen Aggregaten für eine neue Ausstattungsart. In der Maschinensteuerung sind die Daten der unterschiedlichen Ausstattungsaggregate gespeichert und die Maschine greift bei jedem Wechsel der Aggregate auf diese Daten zu. Beim automatischen Einlaufen der Aggregate in den Aufbewahrungsbereich werden diese von der Sensorik erfasst und von der Steuerung registriert, d.h. die Steuerung des Aufbewahrungsbereichs prüft über die Sensorik den Bestand der Aggregate und weist den entsprechenden Aggregaten den neuen Einsatzort und die Position an der Maschine zu. Mit diesem Vorgehen fahren sich die Ausstattungsaggregate weitgehend selbstständig an die Maschine und koppeln sich an. Eine selbsttätige Koppelung kann bspw. auch dadurch ermöglicht werden, dass die Ausstattungsaggregate mit einem geeigneten Führungs- oder Schienensystem gesteuert zwischen Aufbewahrungsbereich und Maschine überführt werden können, ohne dass die Ausstattungsaggregate hierzu einen eigenen Antrieb benötigen. Ein solcher Antrieb kann bspw. durch ein geeignetes Transportsystem gebildet sein.

Dem eben erwähnten Aufbewahrungsbereich können wenigstens zwei Ausstattungsaggregate zugeordnet sein. Vorzugsweise jedoch dient der Aufbewahrungsbereich zur Aufnahme mehrerer gleicher und/oder verschiedener Ausstattungsaggregate. Bei der Verwendung von mehreren Ausstattungsaggregaten ist es durchaus denkbar, dass diese auch mehreren unterschiedlichen Aufbewahrungsbereichen zugeordnet sein können. Diese Aufbewahrungsbereiche stehen in jeden Fall mit der Maschine über eine automatisch gesteuerte Zuführ- und Abführeinrichtung in Wirkverbindung. Wahlweise kann wenigstens ein Aufbewahrungsbereich mit mehreren Maschinen in Wirkverbindung stehen, so dass zwei oder mehr Maschinen mit austauschbaren Ausstattungsaggregaten aus einem gemeinsamen Aufbewahrungsbereich bzw. aus zwei oder mehr gemeinsam verwalteten Aufbewahrungsbereichen versorgt werden können.

Die Zuführ- und Abführeinrichtungen für wenigstens zwei Ausstattungsaggregate stehen zudem mit einer automatisch gesteuerten Koppeleinrichtung in Wirkverbindung. Diese Koppeleinrichtung ist für das Ankoppeln der Ausstattungsaggregate an die Maschine und für das Entkoppeln von dieser verantwortlich. Des Weitern können die automatisch gesteuerten Zuführ- und Abführeinrichtungen sowie die automatisch gesteuerte Koppeleinrichtung mit einer Maschinensteuerung und/oder einer Ansteuerung der Ausstattungsaggregate derart verbunden sein, dass die Ausstattungsaggregate sich selbstständig an die Maschine ankoppeln, sobald von der Maschine Signale für die Ansteuerung der Ausstattungsaggregate übermittelt werden.

Einer bzw. alle Aufbewahrungsbereiche der Ausstattungsaggregate können zusätzlich mit einer weiteren Maschine zum Ausstatten von Artikeln gekoppelt sein und mit dieser über eine weitere automatisch gesteuerte Zuführ- und Abführeinrichtung in Wirkverbindung stehen.

Das Ausstattungsaggregat kann durch ein Etikettieraggregat gebildet werden. Jedoch ist es durchaus denkbar, dass auch mehrere Ausstattungsaggregate durch mehrere Etikettieraggregate gebildet werden können, die für unterschiedliche Etikettenarten und/oder für unterschiedliche Etikettierverfahren eingerichtet sind.

Des Weiteren kann ein Ausstattungsaggregat durch ein oder mehrere Druckaggregate gebildet werden. Diese Druckaggregate können bspw. so ausgebildet sein, dass die Etiketten erst unmittelbar vor dem Aufbringen auf die Artikel bzw. Behälter bedruckt werden. Es können somit weiße Etiketten vollständig vor dem Aufbringen bedruckt werden. Dies bringt den Vorteil mit sich, dass ein Anwender bei der Gestaltung des Etikettenbildes flexibel ist. Bei der Verwendung von Druckaggregaten wäre eine weitere Möglichkeit, dass der Anwender die bereits bedruckten Etiketten mit zusätzlichen Bildern oder Zeichen ergänzen könnte.

Wenigstens eines der Ausstattungsaggregate kann zudem durch ein Direktdruckaggregat gebildet werden. Mit diesem Direktdruckaggregat können die Artikel oder Behälter direkt mittels im Druckaggregat angebrachten Druckköpfen bedruckt werden. In diesem Fall kann ein herkömmliches Papier- oder Kunststoffetikett wegfallen, da das Etikettenbild direkt auf den Artikel bzw. Behälter gedruckt wird.

Es können auch RFID-Etiketten an die Artikel oder Behälter durch die Etikettieraggregate angebracht werden oder erst vor dem Anbringen erstellt werden. Bei dieser Etikettenvariante können die notwendigen Gegenstände wie der Transponder und die Antenne mittels leitfähiger Tinte direkt an die Artikel oder an weiße noch nicht bedruckte Etiketten gedruckt werden. Mit dieser Variante ergibt sich ein Vorteil der möglichen Weiterfolgung von Artikeln in den weiteren Behandlungsstationen.

Diese gesamten Ausstattungsaggregate, die eben genannt wurden, verfügen jeweils über Einrichtungen zur drahtlosen Datenübertragung und/oder Identifikation. Dieser drahtlose Kommunikation- und Signalaustausch erfolgt beispielsweise mit Hilfe einer bekannten Transpondertechnik zwischen der Maschinensteuerung und den Aggregaten sowie dem Aufbewahrungsbereich. Ein Transponder kann im vorliegenden Zusammenhang somit als ein Funk- und Kommunikationsgerät ausgebildet sein, der eingehende Signale aufnimmt und automatisch beantwortet bzw. weiterleitet. Die Steuerung und die Zuordnung der Ausstattungsaggregate, damit diese an die richtige Position der Maschine geführt werden, erfolgt völlig kontaktlos. Zur Energieversorgung der Ausstattungsaggregate können wahlweise drahtgebundene Versorgungsverbindungen vorgesehen sein. Eine weitere Möglichkeit zur Energieversorgung der Ausstattungsaggregate kann auch darin bestehen, dass diese mit Akkumulatoren versehen sind, die sowohl beim Ankoppeln der Aggregate an die Maschine als auch bei deren Aufbewahrung im Aufbewahrungsbereich mit elektrischer Energie versorgt werden, so dass problemlos Zuführungsstrecken bei der Überführung zur oder von der Maschine überbrückt werden können, bei denen die Ausstattungsaggregate entweder mit einem geeigneten Transportsystem befördert werden oder mittels geeigneter Transportbahnen selbsttätig diese Wege zurücklegen.

Die Maschine weist wenigstens einen, vorzugsweise jedoch mindestens zwei oder mehr Koppeleinrichtungen zum gleichzeitigen Betrieb zweier oder mehrerer Ausstattungsaggregate auf. Diese Koppeleinrichtungen befinden sich meist an der Grundkonstruktion der Maschine. Zudem besitzen die Koppeleinrichtungen noch Schnittstellen für die Energieversorgung der Ausstattungsaggregate und/oder für die Datenkommunikation zwischen diesem und der Maschine.

Wenn im vorliegenden Zusammenhang von einem Aufbewahrungsbereich für die aktuell nicht in Betrieb befindlichen Ausstattungsaggregate die Rede ist, so ist dieser Aufbewahrungsbereich funktionell zu verstehen. Es handelt sich dabei um einen Bereich, in dem die Ausstattungsaggregate in Zeiten gelagert und/oder gewartet werden, in denen sie sich nicht im angekoppelten Zustand an der Maschine im Einsatz befinden. Der Aufbewahrungsbereich kann somit auch einen erweiterten Bereich umfassen, in dem defekte oder überholungsbedürftige Ausstattungsaggregate gewartet und/oder repariert werden, auch als Instandsetzungsbereich bezeichnet.

Ein erfindungsgemäßes Verfahren zur Steuerung einer Maschine zum Ausstatten von Artikeln wie Behälter, Flaschen oder dgl., die eine Bewegungseinrichtung zum Bewegen der Behälter und wenigstens ein austauschbares Ausstattungsaggregat aufweist, das beim Anschließen an die Maschine Identifikationsdaten und/oder Steuerungsinformationen mit dieser und/oder der Bewegungseinrichtung austauscht, ist **dadurch gekennzeichnet, dass** die Maschine mit wenigstens einem Aufbewahrungsbereich für wenigstens zwei Ausstattungsaggregate kommuniziert, aus dem der Maschine über eine automatisch gesteuerte Zuführ- und Abführeinrichtung Ausstattungsaggregate zugeführt und/oder von der Maschine entnommen werden. Bei diesem Verfahren können die Ausstattungsaggregate mit der Maschine jeweils über Einrichtungen zur drahtlosen Datenübertragung und/oder Identifikation kommunizieren. Tritt der Fall auf, dass ein Ausstattungsaggregat nicht mehr funktionsfähig ist, so wird es als ein defekt erkanntes Ausstattungsaggregat in den Aufbewahrungsbereich überführt. Im Aufbewahrungsbereich kann es als wartungs- und/oder reparaturbedürftig gekennzeichnet werden. Auch wäre es denkbar, dass solche Ausstattungsaggregate nicht mehr in den Aufbewahrungsbereich überführt werden, sondern dass sie unmittelbar nach einer entsprechenden Fehlermeldung als defekte oder wartungsbedürftig gekennzeichnete Ausstattungsaggregate in einen Instandsetzungsbereich gebracht werden. Dabei kann ein Fehlersignal von der Maschine gleichzeitig an das Ausstattungsaggregat und an den Aufbewahrungsbereich übermittelt werden. Durch das Fehlersignal entkoppelt sich das Ausstattungsaggregat selbstständig und fährt sich in den Instandsetzungsbereich. Gleichzeitig wird ein Signal an den Aufbewahrungsbereich übermittelt, damit dieser zum Austausch ein funktionsfähiges Ausstattungsaggregat an die Maschine überführen kann.

Derartige Fehlersignale können bspw. dann entstehen, wenn ein Verzug eines Etikettenbandes, mechanische Fehler am Aggregat selbst oder dgl. auftreten. Ebenso können diese Fehler auch entstehen, wenn die Ausstattungsaggregate bereits an der Maschine angedockt und/oder in Betrieb genommen worden sind. Das defekte Aggregat würde sich somit selbstständig von der Maschine entkoppeln und sich über die Überführeinrichtung in den Instandsetzungsbereich fahren.

Eine weitere Fehlererkennung wäre, wenn sich bspw. das Ausstattungsaggregat vor der Inbetriebnahme noch im Aufbewahrungsbereich befindet und ein Fehlersignal an diesen sendet. So könnte sich ein funktionsfähiges Ausstattungsaggregat an die Maschine andocken, während sich das defekte Aggregat automatisch zur Wartung in den Instandsetzungsbereich fährt. Nach der Wartung bzw. Instandsetzung können sich die im Instandsetzungsbereich befindlichen Aggregate wieder automatisch über die Zuführeinrichtung in den Aufbewahrungsbereich fahren.

Die genannten Ausstattungsaggregate für Moduletikettiermaschinen oder andere Maschinen zur Behandlung von Artikeln, Behältern und/oder Flaschen können in vielen möglichen Branchen Verwendung finden, bspw. bei der Abfüllung von Getränken, Pharmazeutika, Kosmetikstoffen oder dgl. und beim Einsatz unterschiedlicher Behälter wie solchen aus Papier, Kunststoff, Glas, Blech oder dgl. Materialien.

Weitere Merkmale, Ziele und Vorteile der vorliegenden Erfindung gehen aus der folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.

Fig. 1 zeigt anhand einer schematischen Darstellung das Zusammenwirken einer Maschine zum Ausstatten von Artikeln mit einem Aufbewahrungsbereich für Ausstattungsaggregate.

Fig. 2 zeigt in einer weiteren schematischen Darstellung ein Ausführungsbeispiel einer Maschine und eines Aufbewahrungsbereichs für Ausstattungsaggregate.

Fig. 3 zeigt anhand einer schematischen Darstellung die Handhabung eines defekten Ausstattungsaggregats und eines an der Maschine ersetzten Ausstattungsaggregats.

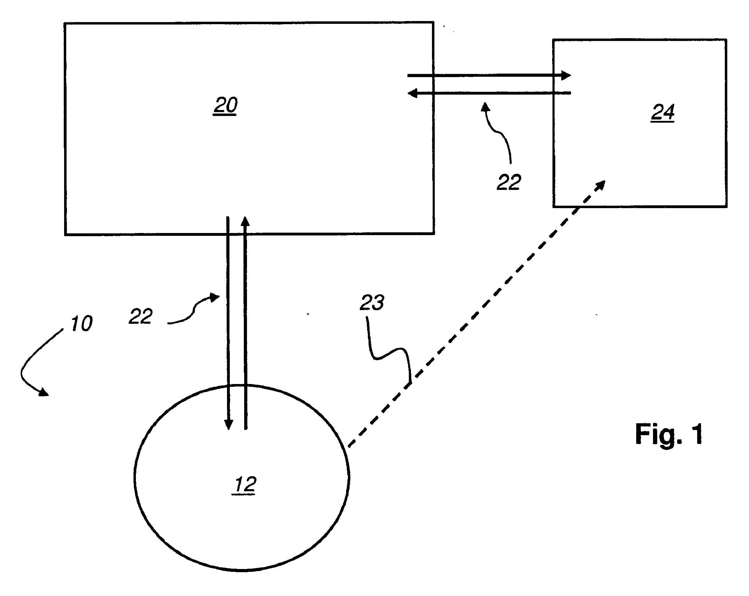

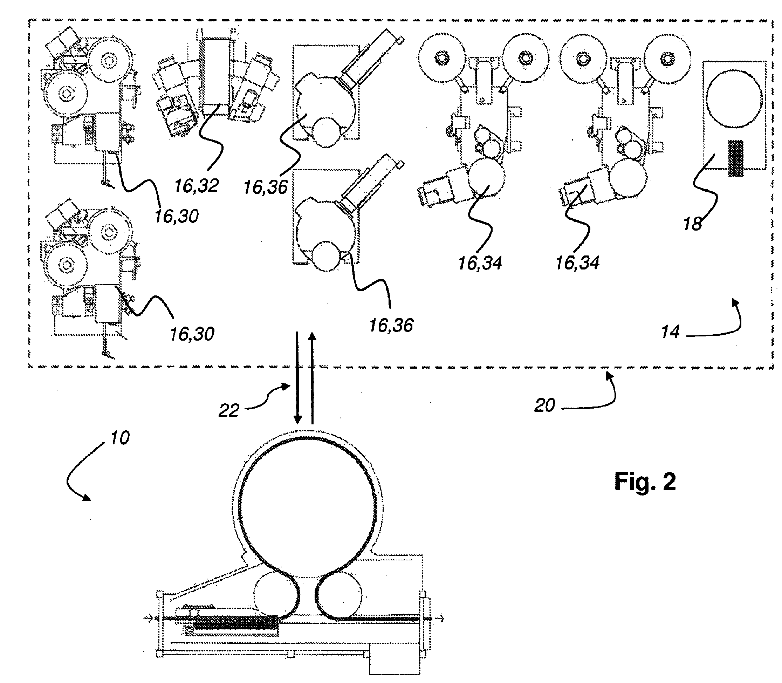

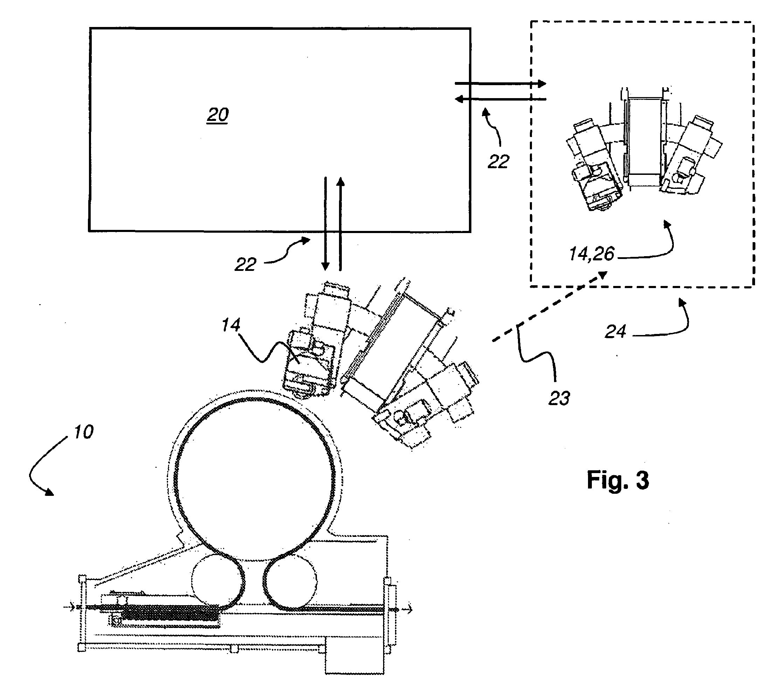

Die schematische Darstellung der Fig. 1 zeigt einen typischen Anwendungsfall für den Einsatz und das Zusammenwirken einer Maschine 10 zum Ausstatten von Artikeln mit einem Aufbewahrungsbereich 20 für Ausstattungsaggregate 14 (in Fig. 2 dargestellt). Ausführungsbeispiele für verschiedene Ausstattungsaggregate 14 werden anhand der folgenden Figuren 2 und 3 näher erläutert. Die Maschine 10 zum Ausstatten der Artikel kann bspw. eine Etikettiermaschine oder dgl. sein, die mit verschiedenen Ausstattungsaggregaten 14 ausgestattet sein kann, die entlang oder über den Umfang einer Bewegungseinrichtung 12, bspw. über den Umfang eines Flaschenkarussells variabel angeordnet sein können. Zum Umrüsten der Maschine 10 können die Ausstattungs- bzw. Druckaggregate 14, 18 (in Fig. 2 dargestellt) variabel an- und abgekoppelt und mittels geeigneter Zuführ- und Abführeinrichtungen 22 aus dem Aufbewahrungsbereich 20 an die Bewegungseinrichtung 12 der Maschine 10 gebracht und dort angekoppelt bzw. von dort abgekoppelt und in den Aufbewahrungsbereich 20 überführt werden. Der Aufbewahrungsbereich 20 kann bspw. durch ein Depot mit mehreren gleichartigen und/oder unterschiedlichen bereit stehenden Ausstattungsaggregaten 14 gebildet sein. Die Ausstattungsaggregate 14 können in diesem Depot 20 wahlweise lediglich in Bereitschaft gehalten werden und mittels der Zuführ- und Abführeinrichtung 22 zwischen dem Aufbewahrungsbereich 20 und der Maschine 10 hin- und hertransportiert bzw. ausgetauscht werden. Wahlweise kann dem Aufbewahrungsbereich 20 auch ein zusätzlicher Instandsetzungsbereich 24 zugeordnet sein, der über weitere Zuführ- und Abführeinrichtungen 22 mit dem Aufbewahrungsbereich 20 verbunden sein kann. Der Instandsetzungsbereich 24 kann zur automatisierten Überführung wartungs- und/oder reparaturbedürftiger Ausstattungsaggregate 26 (in Fig. 3 dargestellt) und/oder zum Ersatz solcher Aggregate 26 durch einwandfreie bzw. gewartete Aggregate 26 dienen. Auch wäre es denkbar, dass eine automatisierte Überführung wartungs- und/oder reparaturbedürftiger Ausstattungsaggregate 26 auch direkt von der Maschine 10 in den Instandsetzungsbereich 24 über eine Überführeinrichtung 23 transportiert werden können.

Die schematische Darstellung der Fig. 2 verdeutlicht eine mögliche Ausführungsvariante des Aufbewahrungsbereiches 20 für eine Vielzahl von Ausstattungsaggregaten 14. Aus der Abbildung wird ersichtlich, dass sich vorbereitete einsatzfähige Aggregate 14 im Aufbewahrungsbereich 20 befinden. Diese Ausstattungsaggregate 14 für die Maschine 10, die bspw. durch eine Moduletikettiermaschine gebildet sein kann, können in vielen verschiedenen Verarbeitungsstufen für unterschiedliche Behältern Verwendung finden. Aus diesem Grund kann sich auch die Moduletikettiermaschine 10 für verschiedene Behälterausstattungen eignen. Im Aufbewahrungsbereich 20 können bspw. ein oder auch mehrere Ausstattungsaggregate 14 von einem Typ stehen. In der schematischen Darstellung der Fig. 2 sind bspw. verschiedene Etikettieraggregate 16 angedeutet. Bspw. ein Selbstklebeaggregat 30 für die Verwendung von Selbstklebeetiketten, Rundumetikettieraggregate 32,34 für Etiketten von der Rolle oder für die Verwendung von bereits zugeschnittenen Etiketten, ein Kaltleimetikettieraggregat 36 sowie ein Direktdruckaggregat 18 für eine Direktdrucketikettierung. Mit einem Kaltleimaggregat 36 können bspw. einzelne Etiketten an die Artikel angebracht werden. Das Selbstklebeaggregat 30 dient zur Ausstattung der Artikel mit Selbstklebeetiketten, die von der Rolle über eine Spendekante abgelöst und auf die Artikel aufgebracht werden. Mit dem Rundumetikettieraggregat 34 werden die Etiketten von der Rolle gewickelt, anschließend präzise zugeschnitten, mit Heißleim versehen und auf die Artikel oder Behälter aufgebracht. Auch wäre es denkbar, weitere Aggregate für eine sog. Sleeveetikettierung oder dgl. in den Aufbewahrungsbereich 20 für die Maschine 10 bereit zu stellen.

Diese verschiedenen gezeigten Ausstattungsaggregate 14 können sich vorzugsweise automatisch an die Maschine 10 bzw. Moduletikettiermaschine über die Zuführ- und Abführeinrichtungen 22 an- bzw. entkoppeln. Das Ankoppeln der Aggregate 14 an die Maschine 10 wird mittels einer entsprechenden Steuerung der Aggregate 14 durchgeführt. Eine Zuordnung der Aggregate 14 an ihre entsprechenden Positionen an der Maschine 10 erfolgt in vorteilhafter Weise kontaktlos, bspw. mittels einer an sich bekannten Transpondertechnik. Die Steuerung der Zuführung und des Austauschs der Aggregate 14 erfolgt je nach den übrigen Einstellungen der Maschine 10 in Abhängigkeit von den auszustattenden Behältern und der benötigten Ausstattungsart. Auf diese Weise kann die Maschine 10 schnell und einfach von einer Klebeetikettierung auf eine Direktdrucketikettierung umgerüstet werden, so dass die unterschiedlichsten Behälter und deren Ausstattungen ohne aufwändige Umrüstungsmaßnahmen durch die Maschine 10 verarbeitet werden können.

Die Ausstattungsaggregate 14 verfügen über einen separaten Antrieb, der mit dem Hauptantrieb der Maschine 10 gekoppelt ist. Des Weiteren kann die Energieversorgung für die Ausstattungsaggregate 14 durch eine induktive Stromversorgung stattfinden. Auch wären Schienensysteme oder Leitungsverbindungen denkbar (nicht in den Fig. dargestellt), die die Aggregate 14 mit Energie versorgen.

In der Fig. 3 wird ein Instandsetzungsbereich 24 dargestellt. Diesen Bereich 24 können die Ausstattungsaggregate 14 automatisch anfahren, wenn an ihnen ein Fehler auftritt. Dabei wird ein Fehlersignal von der Maschine 10 gleichzeitig an das angekoppelte Ausstattungsaggregat 14 und an den Aufbewahrungsbereich 20 übermittelt. Durch dieses Fehlersignal entkoppelt sich das Ausstattungsaggregat 14 selbstständig und fährt sich über die Überführeinrichtung 23 in den Instandsetzungsbereich 24. Gleichzeitig wird ein Signal an den Aufbewahrungsbereich 20 übermittelt. Dieser überführt zum Austausch ein funktionsfähiges Ausstattungsaggregat 14 über die Zuführ- und Abführeinrichtung 22 an die Maschine 10. Dieses funktionsfähige Ausstattungsaggregat 14 ist vom gleichen Typ wie das defekte Aggregat 26.

Derartige Fehlersignale können bspw. dann entstehen, wenn ein Verzug eines Etikettenbandes, mechanische Fehler am Aggregat 14 selbst oder dgl. auftreten. Solche Fehler können auch entstehen, wenn die Ausstattungsaggregate 14 bereits an der Maschine 10 angedockt und/oder in Betrieb genommen worden sind. Das defekte Aggregat 26 entkoppelt sich selbstständig von der Maschine 10 und fährt sich über die Überführeinrichtung 23 in den Instandsetzungsbereich 24.

Eine weitere Fehlererkennung wäre, wenn die Ausstattungsaggregate 14 vor der Inbetriebnahme sich noch im Aufbewahrungsbereich 20 befinden und ein Fehlersignal an diesen sendet. So kann sich bspw. ein gleiches Ausstattungsaggregat 14 an die Maschine andocken, während sich das defekte Ausstattungsaggregat 26 automatisch über die Zuführ- und Abführeinrichtung 22 zur Wartung in den Instandsetzungsbereich 24 fährt. Nach der Wartung bzw. Instandsetzung können sich die im Instandsetzungsbereich 24 befindlichen Aggregate 14 wieder automatisch über die Zuführ- und Abführeinrichtungen 22 in den Aufbewahrungsbereich 20 fahren.

### Bezugszeichenliste

- 10: Maschine oder Moduletikettiermaschine
- 12: Bewegungseinrichtung
- 14: Ausstattungsaggregat
- 16: Etikettieraggregat
- 18: Direktdruckaggregat
- 20: Aufbewahrungsbereich
- 22: Zuführ- und Abführeinrichtung
- 23: Überführeinrichtung
- 24: Instandsetzungsbereich
- 26: wartungs-, reparaturbedürftige oder defekte Ausstattungsaggregate
- 30: Selbstklebeaggregat
- 32: Rundumetikettieraggregat
- 34: Rundumetikettieraggregat für Etiketten von der Rolle
- 36: Kaltleimetikettieraggregat

## Patentansprüche

1. Maschine (10) zum Ausstatten von Artikeln wie Behälter, Flaschen oder dgl. mit einer Bewegungseinrichtung (12) zum Bewegen der Behälter und mit wenigstens einem austauschbaren Ausstattungsaggregat (14), das beim Anschließen an die Maschine (10) Identifikationsdaten und/oder Steuerungsinformationen mit dieser und/oder der Bewegungseinrichtung (12) austauscht, **dadurch gekennzeichnet, dass** der Maschine (10) wenigstens ein Aufbewahrungsbereich (20) für wenigstens zwei Ausstattungsaggregate (14) zugeordnet ist, der mit der Maschine (10) über eine automatisch gesteuerte Zuführ- und Abführeinrichtung (22) wirkverbunden ist.

2. Maschine (10) nach Anspruch 1, **dadurch gekennzeichnet, dass** die Zuführ- und Abführeinrichtung (22) für die wenigstens zwei Ausstattungsaggregate (14) mit einer automatisch gesteuerten Koppeleinrichtung für das Ankoppeln der Ausstattungsaggregate (14) an die Maschine (10) und für das Entkoppeln von dieser wirkverbunden ist.

3. Maschine (10) nach Anspruch 1 oder 2, **dadurch gekennzeichnet, dass** die automatisch gesteuerte Zuführ- und Abführeinrichtung (22) sowie die automatisch gesteuerte Koppeleinrichtung mit einer Maschinensteuerung und/oder einer Ansteuerung der Ausstattungsaggregate (14) gekoppelt sind.

4. Maschine (10) nach einem der Ansprüche 1 bis 3, **dadurch gekennzeichnet, dass** wenigstens eines der Ausstattungsaggregate (14) durch ein Etikettieraggregat (16) gebildet ist.

5. Maschine (10) nach Anspruch 4, **dadurch gekennzeichnet, dass** die Ausstattungsaggregate (14) durch zwei oder mehr Etikettieraggregate (16) gebildet sind, die für unterschiedliche Etikettenarten und/oder für unterschiedliche Etikettierverfahren eingerichtet sind.

6. Maschine (10) nach einem der Ansprüche 1 bis 5, **dadurch gekennzeichnet, dass** wenigstens eines der Ausstattungsaggregate (14) durch ein Direktdruckaggregat (18) gebildet ist.

7. Maschine (10) nach einem der Ansprüche 1 bis 6, **dadurch gekennzeichnet, dass** die Ausstattungsaggregate (14) jeweils über Einrichtungen zur drahtlosen Datenübertragung und/oder Identifikation verfügen.

8. Maschine (10) nach einem der Ansprüche 1 bis 7, **dadurch gekennzeichnet, dass** die Maschine (10) zwei oder mehr Koppeleinrichtungen zum gleichzeitigen Betrieb zweier oder mehrerer Ausstattungsaggregate (14) aufweist.

9. Maschine (10) nach Anspruch 8, **dadurch gekennzeichnet, dass** die Koppeleinrichtung Schnittstellen zur Energieversorgung zum Ausstattungsaggregat (14) und/oder zur Datenkommunikation zwischen diesem und der Maschine (10) aufweist.

10. Maschine (10) nach einem der Ansprüche 1 bis 9, **dadurch gekennzeichnet, dass** der wenigstens eine Aufbewahrungsbereich (20) mit einer weiteren Maschine zum Ausstatten von Artikeln gekoppelt und mit dieser über eine weitere automatisch gesteuerte Zuführ- und Abführeinrichtung (22) wirkverbunden ist.

11. Verfahren zur Steuerung einer Maschine (10) zum Ausstatten von Artikeln wie Behälter, Flaschen oder dgl., die eine Bewegungseinrichtung (12) zum Bewegen der Behälter und wenigstens ein austauschbares Ausstattungsaggregat (14) aufweist, das beim Anschließen an die Maschine (10) Identifikationsdaten und/oder Steuerungsinformationen mit dieser und/oder der Bewegungseinrichtung (12) austauscht, **dadurch gekennzeichnet, dass** die Maschine (10) mit wenigstens einem Aufbewahrungsbereich (20) für wenigstens zwei Ausstattungsaggregate (14) kommuniziert, aus dem der Maschine (10) über eine automatisch gesteuerte Zuführ- und Abführeinrichtung (22) Ausstattungsaggregate (14) zugeführt und/oder von der Maschine (10) entnommen werden.

12. Verfahren nach Anspruch 11, **dadurch gekennzeichnet, dass** die Ausstattungsaggregate (14) mit der Maschine (10) jeweils über Einrichtungen zur drahtlosen Datenübertragung und/oder Identifikation kommunizieren.

13. Verfahren nach Anspruch 11 oder 12, **dadurch gekennzeichnet, dass** ein als defekt erkanntes Ausstattungsaggregat (14) in den Aufbewahrungsbereich (20) überführt und dort als wartungs- und/oder reparaturbedürftig gekennzeichnet wird.

## Claims

1. Apparatus (10) for furnishing articles like containers, bottles or the like with a conveyor unit (12) for conveying the articles; with at least one exchangeable furnishing unit (14), which exchanges identification data and / or control information during connection to the apparatus (10) with said apparatus (10) and / or with the conveyor unit (12), **characterized in that** at least one storage area (20) for at least two furnishing units (14) is assigned to the apparatus (10), whereby an automatically controlled feeding and withdrawing unit (22) is used to operatively connect said storage area (20) with the apparatus (10).

2. Apparatus (10) according to claim 1, **characterized in that** the feeding and withdrawing unit (22) for the at least two furnishing units (14) is operatively connected with an automatically controlled coupling unit for coupling the furnishing units (14) to the apparatus (10) and for uncoupling the furnishing units (14) from the apparatus (10).

3. Apparatus (10) according to claim 1 or 2, **characterized in that** the automatically controlled feeding and withdrawing unit (22) as well as the automatically controlled coupling unit are coupled to a machine control unit and / or to a control of the furnishing units (14).

4. Apparatus (10) according to one of the claim 1 to 3, **characterized in that** at least one of the furnishing units (14) is a labeling unit (16).

5. Apparatus (10) according to claim 4, **characterized in that** the furnishing units (14) are formed by two or more labeling units (16), wherein the labeling units (16) are designed for handling different label types and / or different labeling methods.

6. Apparatus (10) according to one of the claim 1 to 5, **characterized in that** at least one of the furnishing units (14) is a direct printing unit (18).

7. Apparatus (10) according to one of the claim 1 to 6, **characterized in that** the furnishing units (14) are each provided with devices for wireless data transfer and / or identification.

8. Apparatus (10) according to one of the claim 1 to 7, **characterized in that** the apparatus (10) has at least two coupling units so that at least two furnishing units (14) are operable simultaneously.

9. Apparatus (10) according to claim 8, **characterized in that** the coupling unit is provided with interfaces for power supply to the furnishing unit (14) and / or for data communication between said furnishing unit (14) and the apparatus (10).

10. Apparatus (10) according to one of the claim 1 to 9, **characterized in that** the at least one storage area (20) is coupled to another apparatus for furnishing articles and that the at least one storage area (20) is operatively connected with said other apparatus via another automatically controlled feeding and withdrawing unit (22).

11. Method for controlling an apparatus (10) for furnishing articles like containers, bottles or the like, with a conveyor unit (12) for conveying the articles, comprising at least one exchangeable furnishing unit (14), exchanging identification data and / or control information during connection with said apparatus (10) and / or during connection with the conveyor unit (12), **characterized in that** the apparatus (10) communicates with at least one storage area (20) for at least two furnishing units (14), whereby the furnishing units (14) are withdrawn from the storage area (20) and fed into the apparatus (10) via an automatically controlled feeding and withdrawing unit and / or whereby the furnishing units (14) are withdrawn from the apparatus (10) via an automatically controlled feeding and withdrawing unit.

12. Method according to claim 11, **characterized in that** the furnishing units (14) each communicates with the apparatus (10) via devices for wireless data transfer and / or identification.

13. Method according to claim 11 or 12, **characterized in that** a furnishing unit (14), which is identified as defective, is transported to the storage area (20) and labeled there as in need of maintenance and / or repair.

## Revendications

1. Machine (10) d'équipement d'articles tels que récipients, bouteilles ou similaires, comprenant un dispositif de déplacement (12) destiné à déplacer lesdits récipients ainsi qu'au moins un groupe d'équipement (14) échangeable qui, lorsqu'il est raccordé à la machine (10), échange des données d'identification et/ou des informations de commande avec celle-ci et/ou avec ledit dispositif de déplacement (12), **caractérisée par le fait qu'**à ladite machine (10) est associée au moins une zone de stockage (20) pour au moins deux groupes d'équipement (14), qui est en liaison active avec ladite machine (10) via un dispositif d'amenée et d'évacuation (22) commandé de façon automatique.

2. Machine (10) selon la revendication 1, **caractérisée par le fait que** ledit dispositif d'amenée et d'évacuation (22) pour lesdits au moins deux groupes d'équipement (14) est en liaison active avec un dispositif d'accouplement commandé de façon automatique et destiné à accoupler les groupes d'équipement (14) à la machine (10) et à les découpler de celle-ci.

3. Machine (10) selon la revendication 1 ou 2, **caractérisée par le fait que** ledit dispositif d'amenée et d'évacuation (22) commandé de façon automatique ainsi que ledit dispositif d'accouplement commandé de façon automatique sont couplés à une commande de machine et/ou à une commande des groupes d'équipement (14).

4. Machine (10) selon l'une quelconque des revendications 1 à 3, **caractérisée par le fait que** l'un au moins des groupes d'équipement (14) est constitué par un groupe d'étiquetage (16).

5. Machine (10) selon la revendication 4, **caractérisée par le fait que** les groupes d'équipement (14) sont constitués par deux groupes d'étiquetage (16) ou plus qui sont conçus pour des types d'étiquettes différents et/ou pour des procédés d'étiquetage différents.

6. Machine (10) selon l'une quelconque des revendications 1 à 5, **caractérisée par le fait que** l'un au moins des groupes d'équipement (14) est constitué par un groupe d'impression directe (18).

7. Machine (10) selon l'une quelconque des revendications 1 à 6, **caractérisée par le fait que** lesdits groupes d'équipement (14) disposent chacun de dispositifs de transmission de données et/ou d'identification sans fil.

8. Machine (10) selon l'une quelconque des revendications 1 à 7, **caractérisée par le fait que** la machine (10) comprend deux dispositifs d'accouplement ou plus, pour opérer simultanément deux groupes d'équipement (14) ou plus.

9. Machine (10) selon la revendication 8, **caractérisée par le fait que** ledit dispositif d'accouplement comprend des interfaces pour l'alimentation en énergie vers le groupe d'équipement (14) et/ou pour une communication de données entre celui-ci et la machine (10).

10. Machine (10) selon l'une quelconque des revendications 1 à 9, **caractérisée par le fait que** ladite au moins une zone de stockage (20) est couplée à une autre machine d'équipement d'articles et est en liaison active avec celle-ci via un autre dispositif d'amenée et d'évacuation (22) commandé de façon automatique.

11. Procédé de commande d'une machine (10) d'équipement d'articles tels que récipients, bouteilles ou similaires, qui comprend un dispositif de déplacement (12) destiné à déplacer lesdits récipients ainsi qu'au moins un groupe d'équipement (14) échangeable qui, lorsqu'il est raccordé à la machine (10), échange des données d'identification et/ou des informations de commande avec celle-ci et/ou avec ledit dispositif de déplacement (12), **caractérisé par le fait que** ladite machine (10) communique avec au moins une zone de stockage (20) pour au moins deux groupes d'équipement (14) à partir de laquelle des groupes d'équipement (14) sont amenés à la machine (10) par l'intermédiaire d'un dispositif d'amenée et d'évacuation (22) commandé de façon automatique, et/ou sont enlevés de la machine (10).

12. Procédé selon la revendication 11, **caractérisé par le fait que** lesdits groupes d'équipement (14) communiquent avec la machine (10) respectivement via des dispositifs de transmission de données et/ou d'identification sans fil.

13. Procédé selon la revendication 11 ou 12, **caractérisé par le fait qu'**un groupe d'équipement (14) reconnu comme étant défectueux est transféré dans la zone de stockage (20) et y est marqué comme ayant besoin d'être entretenu et/ou réparé.
